# EUROPÄISCHE PATENTSCHRIFT

(11) **EP 1 928 677 B1**
(45) Veröffentlichungstag und Bekanntmachung des Hinweises auf die Patenterteilung: **20.10.2010**
(21) Anmeldenummer: 06764326.2
(22) Anmeldetag: 14.08.2006
(51) Int. Cl.: B60J 3/00, B60J 3/04, B60J 3/06

(54) **BLENDSCHUTZSYSTEM**
ANTIGLARE SYSTEM
SYSTEME ANTI-EBLOUISSEMENT

(30) Priorität: 23.09.2005 DE 102005045436
(43) Veröffentlichungstag der Anmeldung: 11.06.2008
(73) Patentinhaber: ROBERT BOSCH GMBH, 70442 Stuttgart (DE)
(72) Erfinder: BOTHE, Hans-Dieter, 30926 Seelze (DE); ENGELBERG, Thomas, 31137 Hildesheim (DE)
(86) Internationale Anmeldenummer: PCT/EP2006/065289
(87) Internationale Veröffentlichungsnummer: WO 2007/033874

(56) Entgegenhaltungen:
- EP-A1- 0 550 384
- WO-A-99/62732
- WO-A1-03/074307
- DE-A1- 19 933 397
- DE-A1- 19 952 945

## Beschreibung

### Stand der Technik

Die Erfindung betrifft ein Blendschutzsystem für ein Fahrzeug bzw. einen Helm, mit einer Einrichtung zur Steuerung von Blendschutzmitten, gemäß dem Oberbegriff vom Anspruch 1.

Aus DE 10 2004 007 521 A1 ist ein Blendschutzsystem für ein Fahrzeug bekannt, das im wesentlichen aus einem Video-Innenraum-Sensor, Blendschutzmitteln und einer Einrichtung zur Ansteuerung der Blendschutzmittel besteht. Unter dem Begriff" Blendschutzmittel" wird hier eine Einrichtung zum Schutz von Fahrzeug-Insassen vor Blendung verstanden. Dies kann beispielsweise eine Jalousie sein oder ein tönbares Glas mit elektrochromer Beschichtung. Abhängig von der Blendung der Fahrzeug-Insassen, die mit dem Video-Innenraum-Sensor erfasst wird, erfolgt die Ansteuerung der Blendschutzmittel.

In der DE 199 52 945 A1 wird ein Verfahren zum Eliminieren von Blendung beschrieben. Dabei wird mit Hilfe einer Optikeinrichtung ermittelt, ob eine Person geblendet wird, die durch eine Scheibe auf eine Szene blickt. Wird eine Blendgefahr erkannt, wird der Bereich auf der Scheibe ermittelt, durch den ein Lichtstrahl der Blendung ein Auge der Person erreicht. Die Lichtdurchlässigkeit in dem ermittelten Bereich wird dann vermindert, um einen Blendschutz der Person zu erreichen. Eine Strahlungsquelle wird so angesteuert, dass diese den betroffenen Bereich bestrahlt. Die Bestrahlung der Scheibe erreicht in dem betroffenen Bereich eine Verminderung der Lichtdurchlässigkeit.

WO 03/074307 A offenbart ein Blendschutzsystem, das mittels einer Kamera feststellt, ob eine Lichtquelle in den Augen eines Fahrers gespiegelt wird, um gegebenenfalls einen Filter als Blendschutz zwischen der Lichtquelle und den Augen des Fahrers einzusetzen.

### Vorteile der Erfindung

Das erfindungsgemäße Blendschutzsystem für ein Fahrzeug bzw. einen Helm mit Blendschutzmitteln, die in Abhängigkeit von Signalen mindestens eines Sensors steuerbar sind, wobei mindestens ein optischer Sensor für den Fahrzeug- bzw. Helmaußenraum vorgesehen ist und, im Falle des Fahrzeugs, ein weiterer Sensor für die Ermittlung der Sitzeinstellung bzw. der Kopfposition vorgesehen ist, und wobei das Signal bzw. die Signale dieses Sensors bzw. dieser Sensoren derart verwertbar ist bzw. sind, dass sowohl die Intensität als auch die Richtung der Blendung zur Steuerung der Blendschutzmittel einen Beitrag liefern, und die Blendschutzmittel dem aktuellen Sonnenstand entsprechend nachführbar ausgebildet sind, ermöglicht es, dass Fahrzeuginsassen bzw. Helmträger optimal vor Blendung geschützt werden.

Bereits bekannte Verfahren zum automatischen Schutz von Fahrzeug-Insassen vor Blendung basieren auf der Erfassung der Blendungssituation mit einer Video-Innenraumsensorik, (DE 10 2004 007 521 A1). Im Vergleich dazu wird bei der vorliegenden Erfindung auf optische Sensoren zur Erfassung des Kfz-Außenraums sowie auf weitere Sensoren, insbesondere zur Messung der Sitz-Einstellung zurückgegrifien, die heute schon in Serien-Kfz eingesetzt werden bzw. deren Einsatz unmittelbar bevorsteht. Dadurch entsteht ein Mehrfachnutzen dieser Sensorik, wodurch das Blendschutzsystem ohne weiteren Hardwareaufwand realisiert werden kann.

Das erfindungsgemäße System arbeitete besonders vorteilhaft in folgender Merkmalskombination:
- Ansteuerung eines Blendschutzsystems im Fahrzeug abhängig von den Signalen eines Sensor-Verbunds, der aus mindestens einem Sensor zur Erfassung von Lichtquellen im Fahrzeug-Aussenraum sowie aus Sensoren zur Erfassung insbesondere der Sitz-Einstellung (z.B. Höhe, Längsposition, Neigung der Rückenlehne des Sitzes) besteht,
- Nachführung der Blendschützmittel dem aktuellen Sonnenstand entsprechend,
- Schätzung der Kopfposition des Insassen/Fahrers im Bezug zu den Fahrzeugscheiben über die Messung der Sitzposition und mit Hilfe der bekannten Fahrzeug-Geometrie,
- Messung der Intensität und der Richtung von Lichtquellen im Fahrzeug-Aussenraum mit Hilfe mindestens eines optischen Sensors, der aus mindestens einer lichtempfindlichen Fläche besteht, vorzugsweise jedoch als Videosensor mit matrixförmiger Anordnung der lichtempfindlichen Flächen ausgestaltet ist,
- Berechnung der Blendungswirkung auf den Insassen/Fahrer abhängig von seiner Kopfposition in Bezug zu den Fahrzeugscheiben und der Blendschutzmittel sowie abhängig von der gemessenen Intensität und Richtung der Blendung.

Die Erfassung von Lichtquellen im Fahrzeug-Aussenraum erfolgt bei dem erfindungsgemäßen System vorteilhaft mit Hilfe mindestens eines Videosensors, der heute schon Stand der Technik ist und außerdem für weitere Fahrerassistenzsysteme (z.B. Nightvision, Lane-Departure-Warning) verwendet werden kann.

Für die Erfassung der Sitz-Einstellung werden vorteilhafter Weise Sensoren verwendet, die Stand der Technik sind und z.B. schon in heutigen Komfortsitzen serienmäßig integriert sind.

Anhand der Zeichnung werden beispielhaft vorteilhafte Ausgestaltungen der Erfindung näher erläutert. Es zeigen
Figur 1 den schematischen Aufbau des erfindungsgemäßen Blendschutzsystem,
Figur 2 eine Draufsicht auf den Erfassungsbereich des Blendschutzsystems,
Figur 3 die vorausschauende Steuerung des Blendschutzsystems,
Figur 4 ein in einem Helm integriertes Blendschutzsystem.

### Beschreibung von Aufbau und Funktion des erfindungsgemäßen System

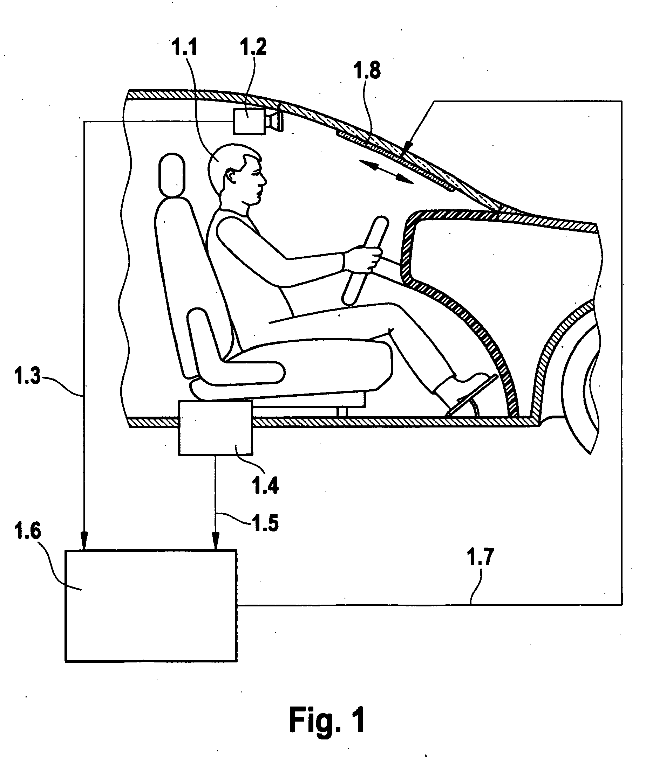

Figur 1 zeigt schematisch das Gesamtsystem zur Vermeidung der Blendung eines Kfz-Insassen/-Fahrers 1.1. Mindestens ein optischer Sensor 1.2, der vorzugsweise eine Mono-Videokamera ist, erfasst den Fahrzeug-Aussenraum. Diese Kamera kann so ausgelegt sein, dass sie insbesondere für diejenigen Wellenlängenbereiche des Lichts, die das menschliche Sehen bei Blendung besonders stark beeinträchtigen, sensitiv ist. Dies kann z.B. durch bestimmte optische Filter und durch geeignete Auslegung des Kamerasensors erreicht werden.

Alternativ zur Realisierung mit einer oder mehreren Kameras können auch Photodioden als Sensoren zur Erfassung von Lichtquellen im Fahrzeug-Aussenraum eingesetzt werden. In diesem Fall wird eine genügende Anzahl von Photodioden benötigt, damit die Richtung der Lichtquelle bestimmt werden kann.

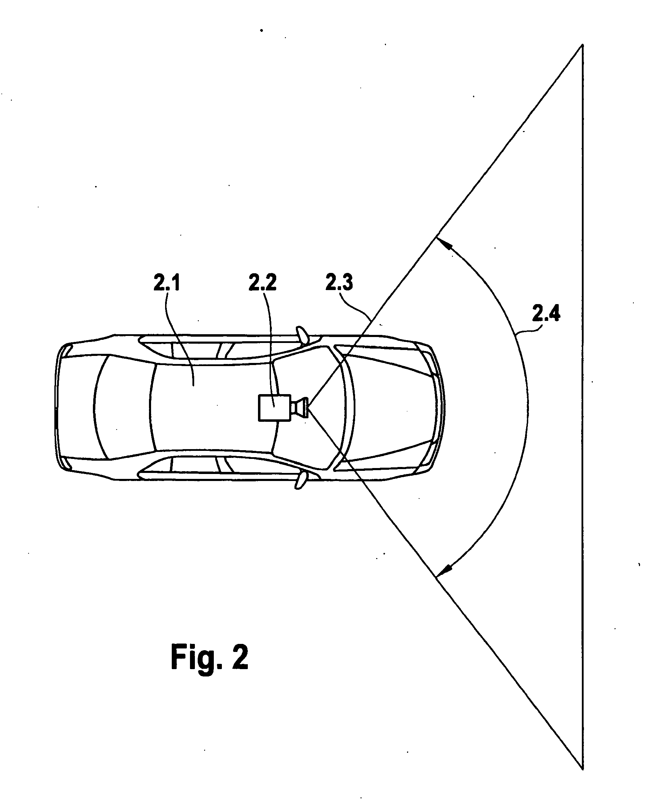

Sofern nur eine Kamera verwendet wird, so erfasst diese zweckmäßigerweise den Bereich vor dem Fahrzeug, da insbesondere von dort eine Blendungswirkung resultiert, die den Fahrer beim Fahren am stärksten beeinträchtigt. Figur 2 zeigt in Draufsicht schematisch eine solche Anordnung. Im Fahrzeug 2.1 ist vorzugsweise im Bereich des Innenspiegels die Kamera 2.2 mit dem Erfassungsbereich 2.3 integriert. Der Öffnungswinkel 2.4 der Kamera 2.1 sollte möglichst weitwinklig sein, damit auch seitlichen Bereiche vor dem Fahrzeug erfasst werden können. Der Erfassungsbereich kann vergrößert werden, indem mehrere Kameras verwendet werden, die unterschiedlich orientiert werden (z.B. vorne, seitlich links und rechts).

Der optische Sensor 1.2 kann ein Videosensor sein, der zusätzlich auch für weitere Fahrerassistenz-Funktionen (z.B. Night-Vision, Lane-Deparlura-Warning) genutzt wird.

Bei der nachfolgenden Beschreibung wird exemplarisch von einem Kamerabild ausgegangen, wobei im allgemeinen auch die Auswertung der Bilder von mehreren Kameras möglich ist.

Das Kamerabild 1.3 wird einer Einrichtung bzw. dem Steuergerät 1.6 zugeführt. Im Steuergerät 1.6 werden im Kamerabild 1.3 Bereiche hoher Intensität ermittelt die über einem einstellbaren Intensitätsschwellwert liegen. Aus der Intensitätsverteilung im Kamerabild werden dann Quellen für die Blendung des Insassen/Fahrers detektiert und deren Richtung im Bezug zum Fahrzeug errechnet.

Alternativ kann die Auswertung des Kamerabilds direkt in einem Video-Steuergerät, das in der Kamera 1.2 integriert ist, erfolgen. In diesem Fall beinhaltet das Signal 1.3 eine Liste der detektierten Quellen der Blendung, deren Intensität sowie deren Richtung im Bezug zum Fahrzeug.

Der Block 1.4 in Figur 1 repräsentiert die Sensoren 1.4 zur Messung der Sitz-Einstellung sowie die Elektronik zur Auswertung der Sensorsignale. Diese Elektronik ist üblicherweise in einem Sitz-Steuergerät integriert. Im Signal 1.5 ist die Längsposition, die Höhenposition und die Neigung der Rückenlehne des Sitzes geeignet codiert. Je nach Freiheitsgraden der Sitzeinstellung können im Signal 1.5 noch weitere Messgrößen enthalten sein (z.B. Neigung der Sitz-Grundfläche). Die Messwerte der Sitz-Einstellung werden im Bezug zu einem festen Koordinatensystem im Fahrzeug angegeben.

Im Steuergerät 1.6 wird dann aus der Sitz-Einstellung die Körpergröße des Fahrzeug-Insassen geschätzt. Dies ist insbesondere für den Fahrer mit ausreichender Genauigkeit möglich, da der Fahrer seinen Sitz so einstellen muss, dass die Bedienelemente des Fahrzeugs (insbesondere Lenkrad, Pedale) noch erreichbar sind. Aus der Körpergröße des Insassen wird im Steuergerät 1.6 die Kopfposition des Insassen/Fahrers 1.1 in aufrechter Sitzposition im Bezug zu den Fahrzeugscheiben geschätzt. Hierfür werden Daten der Fahrzeug-Geometrie sowie Standardmaße von Personen benötigt, die beispielsweise in einer Speichereinheit im Steuergerät 1.6 in Form einer Look-Up-Tabelle abgelegt sind und einfach für die Berechnung abgerufen werden können.

Alternativ kann die oben beschriebene Schätzung der Kopfposition des Insassen/Fahrers auch im Sitz-Steuergerät, das im Block 1.4 integriert ist, erfolgen.

Eine weitere Alternative besteht darin, die Kopfposition mit einem Video-Innenraumsensor gemäß DE 102 26 257 A1 zu messen.

Alternativ kann das Blendschutzsystem so ausgestaltet sein, dass die Körpergröße des Fahrers über eine geeignete Mensch-Maschine-Schnittstelle dem Blendschutzsystem mitgeteilt wird. Hieraus wird dann zum Beispiel im Steuergerät des Blendschutzsystems die Kopfposition des Insassen/Fahrers 1.1 in aufrechter Sitzposition im Bezug zu den Fahrzeugscheiben geschätzt. Hierfür wird auf Daten der Fahrzeug-Geometrie sowie Standardmaße von Personen zurückgegriffen, die beispielsweise in einer Speichereinheit in Form einer Look-Up-Tabelle abgelegt sind. Die Körpergröße des Fahrers kann zusammen mit anderen personenbezogenen Daten und Fahrzeug-Einstellungen gespeichert werden und nach einmalig erfolgter Eingabe zukünftig ausgelöst über eine Memory-Funktion automatisch dem Blendschutzsystem bereitgestellt werden.

Das Steuergerät 1.6 erzeugt Signale 1.7 zur Ansteuerung der Blendschutzmittel 1.8 abhängig von der ermittelten Kopfposition sowie abhängig von den detektierten Quellen der Blendung und deren Richtung im Bezug zum Fahrzeug. Hierfür müssen die Position und die Orientierung des optischen Sensors 1.2 im Bezug zu den Fahrzeug-Fenstern bekannt sein - vorzugsweise aus Konstruktionsdaten. Zusätzlich können die Position und die Orientierung des Sensors mittels geeigneter Kalibrierverfahren, die zum Stand der Technik zählern, individuell für den jeweiligen Fall ermittelt werden.

Blendschutzmittel 1.8 können an einem Teil der Fahrzeug-Fenster oder an sämtlichen Fahrzeug-Fenstern angebracht sein, z.B. an der Frontscheibe, an den Seitenscheiben, an der Hechscheibe und/oder am Dachfenster. Das Blendschutzmittel kann eine motorisch betriebene Jalousie sein oder eine elektrochrome Beschichtung der Scheibe, wobei diese Beschichtung in mehrere einzeln ansteuerbare Segmente aufgeteilt sein kann; siehe DE 10 2004 007 521 A1. Die Blendschutzmittel 1.8 müssen so angeordnet werden, dass das Sichtfeld des Sensors 1.2 unabhängig von der Einstellung der Blendschutzmittel nicht störend eingeschränkt wird.

Die Strategie für die Blendschutzmittel-Ansteuerung kann entweder werkseitig vorgegeben werden und/oder vom Benutzer in einem Einlem-Modus über eine geeignete Mensch-Maschine-Schnittstelle individuell angepasst werden. Wird beispielsweise elektrochromatisches Glas als Blendschutzmittel verwendet, so kann der Tönungsgrad des Glases in Abhängigkeit der Blendungsintensität z.B. in Form einer Kennlinie vorgegeben werden. Außerdem kann die Strategie für die Ansteuerung der einzelnen Elemente des Blendschutzmittels in Abhängigkeit der Blendungsrichtung vorab festgelegt werden. Außerdem kann die Empfindlichkeit bei der Detektion von Blendungsquellen eingestellt werden. Zusätzlich kann auch die Zeitkonstante des Blendschutzsystems, d.h. die Trägheit bei der automatischen Einstellung der Blendschutzmittel, vorgegeben werden.

Zusätzlich zu den oben beschriebenen automatischen Betriebsmodi des Blendschutzsystems kann auch ein manueller Betriebsmodus vorgesehen werden, bei dem der Benutzer die Blendschutzmittel über eine geeignete Mensch-Maschine-Schnittstelle direkt ansteuert.

Zusätzlich kann das oben beschriebene Basissystem mit midestens einer Fotodiode erweitert werden, welche die Lichtintensität im Fahrzeug-Innenraum erfasst. Die Blendschutzmittel 1.8 können dann beispielsweise abhängig von der Differenz der Licht-Intensitäten, die im Außen-und Innenraum des Fahrzeugs gemessen werden, angesteuert werden.

Erfingdungsgemäß stellt das Blendschutzsystem die Blendungsmittel speziell auf die Sonne ein. Diese Funktion kann z. B. vom Benutzer über eine geeignete Mensch-Maschine-Schnittstelle erkennbar gemacht werden. Für diese Funktion wird der aktuelle Sonnenstand im Bezug zum Fahrzeug mit den folgenden Sensoren ermittelt:
- Sensor zur satellitengestützten Bestimmung der Fahrzeug-Position (z.B. GPS-Sensor),
- Sensor zur Bestimmung der Fahrzeug-Orientierung im Bezug zur Himmelsrichtung (Kompass),
- Sensor zur Messung der Fahrzeug-Neigung,
- Uhr (mit Information über das aktuelle Datum).

Der Sonnenstand wird mit bekannten Methoden mit Hilfe der Uhrzeit und der Kenntnis des Datums bestimmt. Aus der gemessenen Fahrzeug-Orientierung und Position wird dann der Sonnenstand im Bezug zum Fahrzeug errechnet und die Sollposition der Sonne in das Kamerabild 1.3 projiziert. Die Blendschutzmittel werden bei vorliegender Option abhängig von der Lichtintensität, die im Kamerabild 1.3 in einem vorgebbaren Bereich um diese Sollposition gemessen wird, angesteuert.

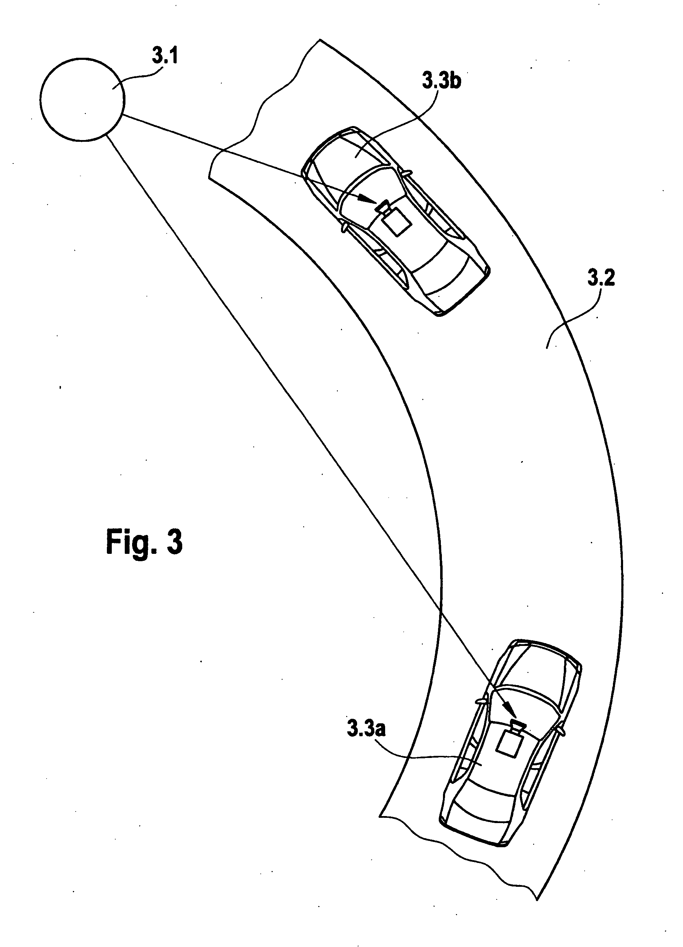

Die Blendschutzmittel 1.8 können abhängig vom Straßenverlauf quasi "vorausschauend" angesteuert werden. Das erfindungsgemäße System wird anhand von Figur 3 beschrieben. Ein Fahrzeug 3.3 fährt auf der Straße 3.2. Zu einem Zeitpunkt t = 0 ist das Fahrzeug mit 3.3a bezeichnet, und zu einem willkürlichen späteren Zeitpunkt t = T wird die Bezeichnung 3.3b für das Fahrzeug verwendet. In der Umgebung des Fahrzeugs sei eine Blendungsquelle 3.1 vorhanden, die mit Hilfe der oben beschriebenen Umfeldsensorik nach Intensität und Richtung erfasst wird. Zum Zeitpunkt t = 0 wird das Blendschutzmittel nach dem oben beschriebenen erfindungsgemäßen Verfahren eingestellt. Mit dem Umfeldsensor wird außerdem der vor dem Fahrzeug liegende Straßenverlauf erfasst, z.B. mittels einer geeigneten Fahrbahnrand-Erkennung, die zum Stand der Technik zählt. Alternativ dazu kann der vor dem Fahrzeug liegende Straßenvertauf mit Hilfe einer satellitengestützten Ortsbestimmung des Fahrzeugs und einer digitalen Straßenkarte bestimmt werden. Auf Basis der zum Zeitpunkt t = 0 detektierten Blendungsquelle, der momentanen Fahrzeug-Geschwindigkeit und dem Straßenverlauf kann die Blendungsrichtung zu einem späteren Zeitpunkt t = T bereits zum Zeitpunkt t = 0 berechnet werden. Die Ansteuerung der Blendschutzmittel kann dadurch vorausschauend und besser angepasst an die erwartete Blendungssituation erfolgen. Dies ist insbesondere dann vorteilhaft, wenn die Einstellung der Blendschutzmittel systembedingt nur mit einer gewissen Verzögerung erfolgen kann. Dies ist beispielsweise dann gegeben, wenn elektrochromatisches Glas als Blendschutzmittel verwendet wird. Je nach Fläche des anzusteuernden elektrochromatischen Glas-Segments sind bei der vollständigen Tönung Verzögerungszeiten von wenigen Sekunden bis hin zu einer Minute zu rechnen.

Das erfindungsgemäße System zur Ansteuerung von Blendschutzmitteln kann auch beliebige Fahrzeuge (z.B. Lastkraftwagen, Baufahrzeuge, Schienenfahrzeuge) und Luftfahrzeuge eingesetzt werden.

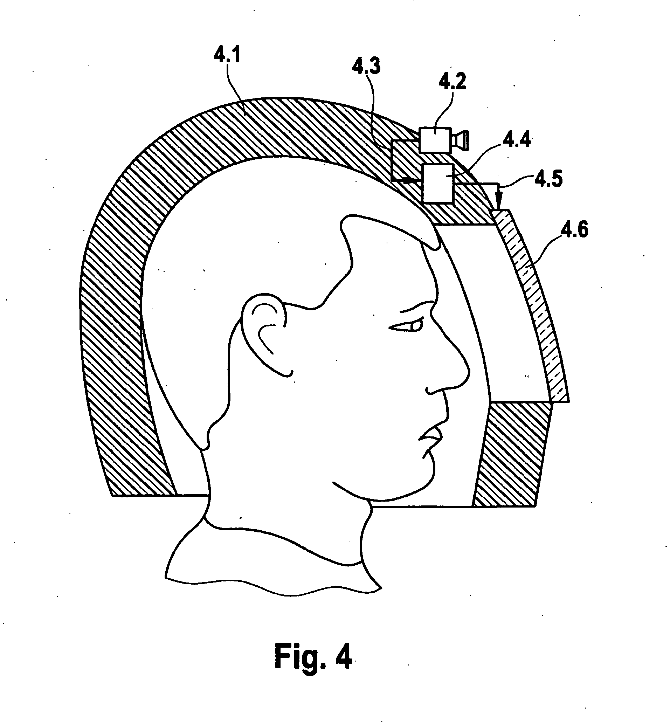

Außerdem kann das erfindungsgemäße System zur Ansteuerung von Blendschutzmitteln auch in einen Helm (z.B. Motorradhelm) integriert werden, wobei hier die Messung der Sitzposition entfällt. Figur 4 zeigt schematisch einen solchen Helm 4.1. Hierin ist ein optischer Sensor 4.2 integriert, der vorzugsweise als Videosensor ausgestaltet ist. Dieser Sensor 4.2 dient zur Erfassung von Lichtquellen, welche die Person, die den Helm trägt, blenden können. Die Auswertung des Sensorsignals 4.3 relativ zu einer blendenden Lichtquelle erfolgt mit einem Steuergerät 4.4, das in den Helm 4.1 integriert ist. Im Vergleich zu dem oben beschriebenen System entfällt hier die Messung der Kopfposition, da diese im Bezug zum Helm eindeutig festgelegt ist. Im Steuergerät 4.4 wird auf Basis des Sensorsignals 4.3 - analog zur oben beschriebenen Vorgehensweise - das Ansteuersignal 4.5 für die Blendschutzmittel 4.6 berechnet. Die Blendschutzmittel 4.6, die auf dem Helm-Visier aufgebracht sind, können zum Beispiel mit elektrochromatischem Glas oder mit einer elektrochromen Beschichtung des Helm-Visiers realisiert werden. Die Blendschutzmittel 4.6 sind vorteilhaft so ausgestaltet, dass einzelne Bereiche des Helm-Visiers einzeln angesteuert werden können. Die Stromversorgung des Sensors 4.2, des Steuergeräts 4.4 und der Blendschutzmittel 4.6 kann z.B. mit einer Batterie erfolgen, die in den Helm 4.1 integriert ist. Alternativ dazu kann der Helm über ein Anschlusskabel verfügen, über welches das Blendschutzsystem von außen, z.B. von der FahrzeugBatterie, mit Strom versorgt wird. Diese Stromversorgung ist in Figur 4 nicht dargestellt.

## Patentansprüche

1. Blendschutzsystem für ein Fahrzeug bzw. einen Helm, mit einer Einrichtung (1.6, 4.4) zur Steuerung von Blendschutznitteln (1.8, 4.6), welche in Abhängigkeit von Signalen mindestens eines Sensors (1.2, 1.4, 4.2) steuerbar sind, wobei mindestens ein optischer Sensor (1.2, 4.2) für den Fahrzeug- bzw. Helmaußenraum vorgesehen ist und, im Falle des Fahrzeugs, ein weiterer Sensor (1.4) für die Ermittlung der Sitzeinstellung bzw. der Kopfposition vorgesehen ist, und wobei das Signal bzw. die Signale dieses Sensors bzw. dieser Sensoren derart verwertbar ist bzw. sind, dass sowohl die Intensität als auch die Richtung der Blendung zur Steuerung der Blendschutzmittel (1.8, 4.6) einen Beitrag liefern, **dadurch gekennzeichnet, dass** die Blendschutzmittel dem aktuellen Sonnenstand entsprechend nachführbar ausgebildet sind.

2. Blendschutzsystem nach Anspruch 1, **dadurch gekennzeichnet, dass** die Einrichtung (1.6) im Falle des Fahrzeugs dazu vorgesehen ist, eine Schätzung der Kopfposition des Fahrers und/oder der Insassen mittels der vom Sensor für die Sitzeinstellung (1.4) gelieferten Signale und der Fahrzeug-Geometrie vorzunehmen.

3. Blendschutzsystem nach Anspruch 1 oder 2, **dadurch gekennzeichnet, dass** der mindestens eine optische Sensor (1.2) vorgesehen ist, um die Intensität und Richtung von Lichtquellen im Fahrzeug bzw. Helm- Außenraum zu messen.

4. Blendschutzsystem nach einem der Ansprüche 1 bis 3, **dadurch gekennzeichnet, dass** der mindestens eine optische Sensor (1.4) mindestens eine lichtempfindliche Fläche aufweist, vorzugsweise eine matrixförmige lichtempfindliche Fläche eines Videosensors.

5. Blendschutzsystem nach einem der Ansprüche 1 bis 4, **dadurch gekennzeichnet, dass** zur Steuerung der Blendschutzmittel (1.8) im Falle des Fahrzeugs die Blendenwirkung auf den Fahrer und/oder die Insassen in Abhängigkeit der Kopfposition in Bezug zu mindestens einer Fahrzeugscheibe und der Blendschutzmittel (1.8) sowie abhängig von der ermittelten Intensität und Richtung der Blendung herangezogen wird.

6. Blendschutzsystem nach einem der Ansprüche 1 bis 5, **dadurch gekennzeichnet, dass** als optischer Sensor (1.2) ein für andere Zwecke sowieso vorgesehener Sensor mitbenutzt wird, z.B. ein Sensor für Nightvision oder Lane-Departure-Warning.

7. Blendschutzsystem nach einem der Ansprüche 1 bis 6, **dadurch gekennzeichnet, dass** der optische Sensor (1.2) so ausgelegt ist, dass er für den Wellenlängenbereich des Lichts, der das menschliche Sehen bei Blendung beeinträchtigt, sensitiv ist.

8. Blendschutzsystem nach einem der Ansprüche 1 bis 7, **dadurch gekennzeichnet, dass** der optische Sensor (1.2) aus einer Mehrzahl von Photodioden besteht, die so angeordnet sind, dass damit eine Richtungsbestimmung einer Lichtquelle erfolgen kann.

9. Blendschutzsystem nach einem der Ansprüche 1 bis 8, **dadurch gekennzeichnet, dass** es im Falle des Fahrzeugs ein Sensor für die Sitzeinstellung (1.4) umfasst, wobei der sSensor bzw. eine ihm zugeordnete Einrichtung (1.6) die Längenposition, die Höhenposition und die Neigung der Rückenlehne codiert und darauf die Körpergröße und die Kopfposition schätzt.

10. Blendschutzsystem nach einem der Ansprüche 1 bis 8, **dadurch gekennzeichnet, dass** der Einrichtung (1.6) zur Steuerung der Blendschutzmittel (1.8) im Falle des Fahrzeugs über eine geeignete Schnittstelle die Körpergröße des Fahrers und/oder der Insassen mitgeteilt wird, um zusammen mit der Sitzposition die Kopfposition zu schätzen.

11. Blendschutzsystem nach einem der Ansprüche bis 10, **dadurch gekennzeichnet, dass** die Blendschutzmittel (1.8) im Falle des Fahrzeugs auf mindestens einer der Fahrzeugscheiben oder Dachfenster mechanisch insbesondere nach Art eine Jalousie steuerbar sind und/oder elektronisch insbesondere in Form von elektronisch steuerbarer elektrochromer Beschichtung der Fahrzeugscheiben steuerbar sind.

12. Blendschutzsystem nach einem der Ansprüche 1 bis 11, **dadurch gekennzeichnet, dass** die Blendschutzmittel (1.8) abhängig vom Straßenverlauf vorausschauend ansteuerbar sind.

13. Blendschutzsystem nach einem der Ansprüche 1 bis 12 **dadurch gekennzeichnet, dass** die Blendschutzmittel (4.6) im Falle des Helms auf dem Helmvisier aufgebracht sind und einzeln ansteuerbar sind.

14. Blendschutzsystem nach einem der Anspruche 1 bis 13, **dadurch gekennzeichnet, dass** die Blendschutzmittel (4.6) im Falle des Helms mit elektrochromatischem Glas oder einer elektrochromen Beschichtung des Helm-Visiers realisiert sind.

## Claims

1. Anti-dazzle system for a motor vehicle and/or a helmet, having a device (1.6, 4.4) for controlling anti-dazzle means (1.8, 4.6) which can be controlled as a function of signals from at least one sensor (1.2, 1.4, 4.2), at least one optical sensor (1.2, 4.2) being provided for the space outside the vehicle or the helmet, and in the case of the vehicle a further sensor (1.4) being provided for determining the seat setting or the head position, and it being possible for the signal or the signals of this sensor or these sensors to be used in such a way that both the intensity and the direction of the dazzle contribute to controlling the anti-dazzle means (1.8, 4.6), **characterized in that** the anti-dazzle means are designed such that they can track in accordance with the current position of the sun.

2. Anti-dazzle system according to Claim 1, **characterized in that** in the case of the vehicle the device (1.6) is provided for the purpose of undertaking an estimate of the head position of the driver and/or the occupants by means of the signals supplied by the sensor for the seat setting (1.4) and by means of the vehicle geometry.

3. Anti-dazzle system according to Claim 1 or 2, **characterized in that** the at least one optical sensor (1.2) is provided in order to measure the intensity and direction of light sources in the space outside the vehicle or helmet.

4. Anti-dazzle system according to one of Claims 1 to 3, **characterized in that** the at least one optical sensor (1.4) has at least one light-sensitive surface, preferably a matrix-type light-sensitive surface of a video sensor.

5. Anti-dazzle system according to one of Claims 1 to 4, **characterized in that** in order to control the anti-dazzle means (1.8) in the case of the vehicle, the dazzling effect on the driver and/or the occupants is used as a function of the head position with reference to at least one vehicle window and the anti-dazzle means (1.8) as well as as a function of the determined intensity and direction of the dazzle.

6. Anti-dazzle system according to one of Claims 1 to 5, **characterized in that** a sensor provided in any case for other purposes, for example a sensor for night vision or lane departure warning, is also used as optical sensor (1.2).

7. Anti-dazzle system according to one of Claims 1 to 6, **characterized in that** the optical sensor (1.2) is designed such that it is sensitive to the wavelength region of the light which impairs human vision in the event of dazzle.

8. Anti-dazzle system according to one of Claims 1 to 7, **characterized in that** the optical sensor (1.2) consists of a plurality of photodiodes which are arranged such that they can be used to determine the direction of a light source.

9. Anti-dazzle system according to one of Claims 1 to 8, **characterized in that** in the case of the vehicle it comprises a sensor for the seat setting (1.4), the sensor or a device (1.6) assigned to it coding the longitudinal position, the vertical position and the inclination of the seat back and thereupon estimating the body size and the head position.

10. Anti-dazzle system according to one of Claims 1 to 8, **characterized in that** in the case of the vehicle a suitable interface is used to communicate the body size of the driver and/or of the occupants to the device (1.6) for controlling the anti-dazzle means (1.8), in order to estimate the head position together with the seat position.

11. Anti-dazzle system according to one of Claims 1 to 10, **characterized in that** in the case of the vehicle the anti-dazzle means (1.8) can be controlled on at least one of the vehicle windows or sunroof in mechanical fashion, particularly in the manner of a Venetian blind, and/or can be controlled electronically, in particular in the form of an electronically controllable electrochromic coating of the vehicle windows.

12. Anti-dazzle system according to one of Claims 1 to 11, **characterized in that** the anti-dazzle means (1.8) can be activated as a function of the road profile.

13. Anti-dazzle system according to one of Claims 1 to 12, **characterized in that** in the case of the helmet the anti-dazzle means (4.6) are mounted on the helmet visor and can be activated individually.

14. Anti-dazzle system according to one of Claims 1 to 13, **characterized in that** in the case of the helmet the anti-dazzle means (4.6) are realised with electrochromic glass or an electrochromic coating of the helmet visor.

## Revendications

1. Système anti-éblouissement pour un véhicule ou un casque, comprenant un dispositif (1.6, 4.4) de commande de moyens anti-éblouissement (1.8, 4.6), lesquels peuvent être commandés en fonction des signaux d'au moins un capteur (1.2, 1.4, 4.2), au moins un capteur optique (1.2, 4.2) étant prévu pour l'espace extérieur du véhicule ou du casque et, dans le cas du véhicule, un capteur supplémentaire (1.4) étant prévu pour déterminer le réglage des sièges ou la position de la tête, et le signal ou les signaux de ce capteur ou de ces capteurs pouvant être exploité(s) de telle sorte qu'à la fois l'intensité et la direction de l'éblouissement apportent une contribution à la commande des moyens anti-éblouissement (1.8, 4.6), **caractérisé en ce que** les moyens anti-éblouissement sont configurés de manière à pouvoir être asservis en fonction de la position actuelle du soleil.

2. Système anti-éblouissement selon la revendication 1, **caractérisé en ce que** dans le cas d'un véhicule, le dispositif (1.6) est prévu pour effectuer une estimation de la position de la tête du conducteur et/ou des passagers au moyen des signaux délivrés par le capteur de réglage du siège (1.4) et de la forme géométrique du véhicule.

3. Système anti-éblouissement selon la revendication 1 ou 2, **caractérisé en ce que** l'au moins un capteur optique (1.2) est prévu pour mesurer l'intensité et la direction des sources de lumière dans l'espace extérieur du véhicule ou du casque.

4. Système anti-éblouissement selon l'une des revendications 1 à 3, **caractérisé en ce que** l'au moins un capteur optique (1.4) présente au moins une surface photosensible, de préférence une surface photosensible en forme de matrice d'un capteur vidéo.

5. Système anti-éblouissement selon l'une des revendications 1 à 4, **caractérisé en ce que** dans le cas d'un véhicule, la commande des moyens anti-éblouissement (1.8) s'effectue en utilisant l'effet de l'éblouissement sur le conducteur et/ou les passagers en fonction de la position de la tête par rapport à au moins une vitre du véhicule et aux moyens anti-éblouissement (1.8) et aussi en fonction de l'intensité et de la direction déterminées de l'éblouissement.

6. Système anti-éblouissement selon l'une des revendications 1 à 5, **caractérisé en ce que** le capteur optique (1.2) utilisé est un capteur qui est de toute façon prévu à d'autres fins, par exemple un capteur de vision nocturne ou un avertisseur de changement de voie.

7. Système anti-éblouissement selon l'une des revendications 1 à 6, **caractérisé en ce que** le capteur optique (1.2) est conçu de telle sorte qu'il est sensible à la plage de longueurs d'onde de la lumière qui affecte la vision humaine en cas d'éblouissement.

8. Système anti-éblouissement selon l'une des revendications 1 à 7, **caractérisé en ce que** le capteur optique (1.2) se compose d'une pluralité de photodiodes qui sont disposées de telle sorte qu'il est possible avec elles de déterminer la direction d'une source de lumière.

9. Système anti-éblouissement selon l'une des revendications 1 à 8, **caractérisé en ce que** dans le cas d'un véhicule il comprend un capteur pour le réglage du siège (1.4), le capteur ou un dispositif (1.6) qui lui est associé codant la position en longueur, la position en hauteur et l'inclinaison du dossier du siège et estimant à partir de là la taille corporelle et la position de la tête.

10. Système anti-éblouissement selon l'une des revendications 1 à 8, **caractérisé en ce que** pour commander les moyens anti-éblouissement (1.8), dans le cas d'un véhicule, la taille corporelle du conducteur et/ou des passagers est communiquée au dispositif (1.6) afin d'estimer la position de la tête conjointement avec la position du siège.

11. Système anti-éblouissement selon l'une des revendications 1 à 10, **caractérisé en ce que** dans le cas d'un véhicule, les moyens anti-éblouissement (1.8) peuvent être commandés mécaniquement sur au moins l'une des vitres du véhicule ou sur le toit ouvrant, notamment à la manière d'un store et/ou peuvent être commandés de manière électronique, notamment sous la forme d'un revêtement électrochrome à commande électronique des vitres du véhicule.

12. Système anti-éblouissement selon l'une des revendications 1 à 11, **caractérisé en ce que** les moyens anti-éblouissement (1.8) peuvent être commandés par anticipation en fonction du tracé de la route.

13. Système anti-éblouissement selon l'une des revendications 1 à 12, **caractérisé en ce que** dans le cas d'un casque, les moyens anti-éblouissement (4.6) sont montés sur la visière du casque et peuvent être commandés individuellement.

14. Système anti-éblouissement selon l'une des revendications 1 à 13, **caractérisé en ce que** dans le cas d'un casque, les moyens anti-éblouissement (4.6) sont réalisés avec du verre électrochromatique ou un revêtement électrochrome de la visière du casque.
